# EUROPEAN PATENT SPECIFICATION

(11) **EP 3 244 721 B1**
(45) Date of publication and mention of the grant of the patent: **19.08.2020**
(21) Application number: 16710015.5
(22) Date of filing: 08.01.2016
(51) Int. Cl.: A01F 15/07

(54) **COMPACT BALE FORMING AND WRAPPING APPARATUS**
KOMPAKTE BALLENFORMUNGS- UND UMWICKLUNGSVORRICHTUNG
APPAREIL DE FORMATION ET D'ENRUBANNAGE DE BALLES COMPACTES

(30) Priority: 16.01.2015 NL 2014141
(43) Date of publication of application: 22.11.2017
(73) Proprietor: Forage Company B.V., 3147 PB Maassluis (NL)
(72) Inventor: REIJERSEN VAN BUUREN, Willem Jacobus, 3147PB Maassluis (NL)
(74) Representative: AGCO Intellectual Property Department
(86) International application number: PCT/NL2016/050013
(87) International publication number: WO 2016/114651

(56) References cited:
- EP-A1- 2 292 084
- EP-A2- 1 407 657
- EP-A2- 1 903 851
- US-A1- 2001 013 214
- US-A1- 2014 165 856

## Description

### FIELD OF THE INVENTION

The invention refers to a bale forming and wrapping apparatus and to a bale forming and wrapping method for forming and wrapping a bale from loose material, in particular for forming a round-cylindrical bale from agricultural crop material and for wrapping the circumferential or the entire surface of this bale.

### BACKGROUND OF THE INVENTION

An apparatus according to the invention forms from injected loose material a bale in a bale forming chamber and wraps the formed bale into wrapping material while the bale is kept in a wrapping position outside of the bale forming chamber. The bale is wrapped into at least one web of wrapping material, typically into an impermeable plastic sheet. The combination of a baler with a bale forming chamber and a wrapper outside of the pressing chamber is often called a baler-wrapper combination. In general the wrapper wraps the entire bale surface into at least one plastic sheet.

Typically a baler-wrapper combination for agricultural purposes is moved in a travelling direction over an agricultural field and operates as follows: It injects loose material into a bale forming chamber, forms under pressure in the bale forming chamber a bale, places a net or several strands of twine around the bale in the bale forming chamber, ejects the formed bale out of the bale forming chamber, and wraps the bale being kept in the wrapping position outside the bale forming chamber into at least one web of wrapping material. This wrapping material is typically impermeable, e.g. is a plastic sheet.

Different baler-wrapper combinations have been disclosed.

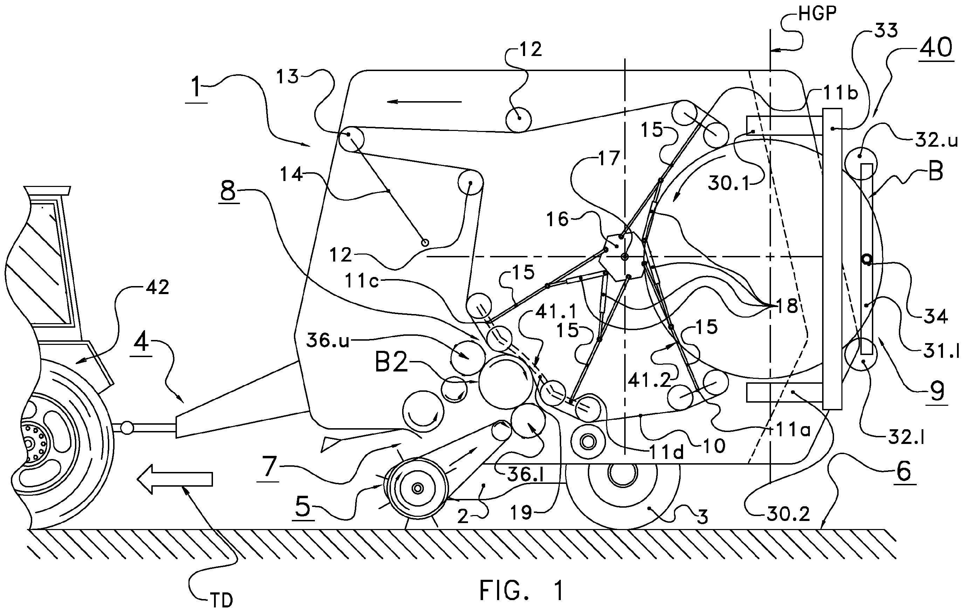

EP 2292084 B1 discloses an agricultural harvester comprising a bale forming apparatus and a wrapping apparatus. Seen in the travelling direction of the harvester the wrapping apparatus is mounted behind the bale forming apparatus, cf. Fig. 1. The bale forming apparatus forms a round-cylindrical bale in a drum-shaped bale forming chamber. The bale is ejected out of the bale forming chamber and is transferred onto a wrapping table of the wrapping apparatus. The wrapping table rotates the round-cylindrical bale around a horizontal rotating axis being perpendicular to the travelling direction of the harvester. Two holders for two supply reels with wrapping material (two plastic sheet films) are moved along a circle around the bale rotated by the wrapping table. A driven wrapping ring 55 holds and rotates the two holders for the two reels. This wrapping ring 55 is arranged in a vertical plane being perpendicular to the travelling direction and perpendicular to the ground. Therefore the two holders are rotated around a horizontal rotating axis 56 being parallel to the travelling direction and being perpendicular to the bale center axis. Thanks to the wrapping ring 55 a distance between the holders 62, 63 and the rotating axis 56 occurs. Thanks to the vertical orientation of the wrapping ring 55 it is possible to transfer a round bale 2 from the bale forming chamber through the wrapping ring 55 onto the wrapping table.

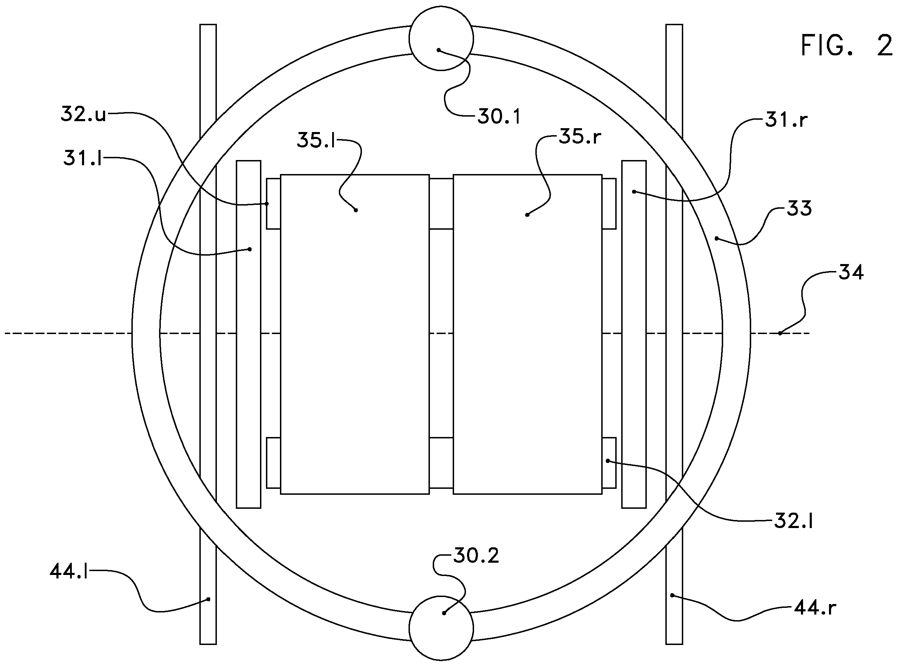

EP 1407657 A2 and US 6901719 B2 show a combination 10 of a round baler 12 with a wrapping device 14, cf. Fig. 1. A round bale 44 is created in a pressing room 22 and is ejected out of the room 22 through an outlet 42. The bale 44 is shifted through a vertical guiding ring 110 onto a carrier 82, cf. Fig. 7. The driven vertical guiding ring 110 of the wrapping device 14 moves two holders for two webs of wrapping material around the bale 44 on the carrier 82, cf. Fig. 2. The carrier 82 comprises a frame 92 and a roller 94. The horizontal rotating axis of the roller 94 extends perpendicular to the travelling direction. The carrier 82 carries the round bale 44 while the bale 44 is wrapped. In addition the carrier 82 rotates the bale 44 around its center axis. An actuator 86 can pivot the carrier 82 with respect to the vertical guiding ring 110, cf. Fig. 4 and Fig. 5. Fig. 5 shows how a round bale 44 is transferred from the pressing chamber onto the carrier 82 on which the bale 44 is to be wrapped.

A similar pressing-wrapping combination is described in EP 1393614 A2 and US 6928796 B2. It is claimed and described that and how the round bale 44 to be wrapped is rotated around a horizontal axis perpendicular to the travelling direction, cf. Fig. 2. The vertical wrapping ring 110 is rotated in a plane which is vertical and perpendicular to the travelling direction such that the wrapping ring 110 rotates around a horizontal axis being parallel to the travelling direction.

US 2001/0013214 A1 discloses a round baler 10 which comprises an upper chamber section 20 being divided into front, several rear chamber wall portions 54 and 56, and a rear conveyer 44, cf. Fig. 1 to Fig. 4. A binding device 24 can provide net as wrapping material. The binding device 24 is positioned at an upper forward location at two opposing sidewalls 58. A wrapping device 22 comprises two wrapping arms 66 which are mounted at a carrier 64 and which carry two reels 68, cf. Fig. 6. The wrapping device 22 can provide two plastic films. A bale forming chamber 72 can be formed by the chamber wall portions 54 and 56 and the rear conveyer 44, cf. Fig. 1 and Fig. 2. A round-cylindrical bale is formed in this baling chamber 72 and is wrapped into a net which is taken from the binding device 24. After the bale in the chamber 72 is formed and wrapped into a net, the two chamber wall portions 54 and 56 are raised, cf. the transfer from Fig. 3 to Fig. 4. A guide arrangement 32 guides these wall portions 54, 56 away from the bale 28 on the rear lower conveyer 44, cf. the transfer from Fig. 4 to Fig. 5. The wrapping device 22 wraps the bale on the rear conveyer 44 into plastic sheet 68.

In DE 4317206 A1 and EP 2606715 A1 two pressing-wrapping combinations are described which operate in a continuous manner. While a bale on the wrapping table is wrapped, the crop material is buffered in a buffer storage positioned between the pick-up unit and the pressing chamber. The bale on the wrapping table is rotated. Two holding arms carry and guide two film rollers around the baler on the wrapping table.

DE 19932336 A1 describes a further pressing-wrapping combination.

A bale forming and wrapping apparatus according to the precharacterising portion of claim 1 is disclosed in US 2014/0165856.

### SUMMARY OF THE INVENTION

A problem solved by the invention is to provide a bale forming and wrapping apparatus with the features of the preamble of claim 1 and a bale forming and wrapping method with the features of the preamble of claim 29 wherein the bale forming and wrapping apparatus has at least during regular operation a shorter overall length than known baler-wrapper combinations.

This problem is solved by a bale forming and wrapping apparatus with the features of claim 1 and by a bale forming and wrapping method with the features of claim 29. Preferred embodiments are specified in the depending claims.

The bale forming and wrapping apparatus according to the invention comprises
- a bale forming means and
- a wrapping device.

The bale forming means provides and partially delimits a bale forming chamber. The wrapping device is positioned outside of the provided bale forming chamber and comprises
- at least one reservoir holder and
- a bale supporting device.

The or every reservoir holder is arranged to hold a reservoir with wrapping material.

The bale forming and wrapping apparatus is arranged
- to form a bale in the provided bale forming chamber,
- to move a formed bale out of the bale forming chamber into a wrapping position outside of the bale forming chamber,
- to carry the bale in the wrapping position, and
- to wrap the bale while the bale is carried in the wrapping position outside of the bale forming chamber.

According to the invention the bale supporting device and the bale forming means are arranged to jointly carry the bale in the wrapping position while the bale is wrapped. Thereby the bale in the wrapping position is sandwiched between the bale forming means and the bale supporting device. The carried bale can rotate while the bale is kept in the wrapping position.

The method according to the invention comprises the following steps:
- The bale forming means forms a bale in the bale forming chamber.
- Subsequently the formed bale is moved out of the bale forming chamber into the wrapping position and is rotated and wrapped while being carried in the wrapping position outside of the bale forming chamber.

For wrapping the bale outside of the bale forming chamber the following steps are performed:
- The bale supporting device and the bale forming means jointly carry the bale in the wrapping position while the bale is wrapped.
- The bale is carried in the wrapping position outside of the bale forming chamber. The bale in the wrapping position is located between the bale forming means and the bale supporting device.
- The bale is kept in the wrapping position such that the bale is sandwiched and can be rotated.
- While the bale is carried in the wrapping position, it is wrapped into wrapping material which is taken from the or at least one reservoir holder moved around the bale. At least one web of wrapping material is placed on the bale's surface.

### ADVANTAGES

The length of a baler-wrapper combination is mainly determined by the length of the bale forming means providing the bale forming chamber and the length of the bale supporting device. In a conventional bale forming and wrapping apparatus the bale supporting device alone carries the ejected bale to be wrapped in the wrapping position outside of the bale forming chamber. In general the bale supporting device comprises a so-called wrapping table which carries from below the bale in the wrapping position and which rotates the bale to be wrapped around a horizontal rotating axis. The wrapping table must be large enough for carrying the bale. The wrapping table extends in a plane being horizontal or only slightly sloping such that the bale rests on the wrapping table and cannot roll away while being wrapped. In general the bale is ejected out of the bale forming chamber after opening a pivotal discharge gate. It must be avoided that this discharge gate collides with a moving part of the wrapper, e.g. a rotated supply reel, or with a bale in the wrapping position. Therefore the wrapping table significantly contributes to the overall length of the baler-wrapper combination.

Some known baler-wrapper combinations comprise a bale supporting device which can be pivoted from an operating position into a transport position. The overall length of the combination with the bale supporting device being in the transport position is shorter than with the bale supporting device being in the operating position. This transport position is used for transporting the combination, e.g. for shipping the combination or for moving the combination over a public street. But the combination can only wrap bales when the bale supporting device is in the operating position. Several times the bale supporting device must be pivoted from one position into the other position. This requires an actuator.

It is possible but thanks to the invention not necessary to reduce the overall length of an apparatus according to the invention by providing an operating position and a transport position for the bale supporting device.

In contrast to a conventional baler-wrapper combination the bale forming and wrapping apparatus according to the invention carries the bale in the wrapping position between the bale supporting device and the bale forming means. According to the invention the bale being in the wrapping position is therefore carried not only by the bale supporting device but in addition by the bale forming means and is carried from two sides. Not only the bale supporting device but also the bale forming means prevents the bale from falling onto the ground while the bale is wrapped in the wrapping position.

This feature reduces the overall length of the apparatus. The maximal possible size of a bale which can be formed and wrapped, however, is not reduced. One reason for the length reduction: The feature that the bale is carried by the bale supporting device and additionally carried by the bale forming means makes it possible to arrange the bale supporting device in a more sloping or even in a vertical position while the bale is wrapped. The bale supporting device can operate in this nearly vertical position and cannot only be vertical in a transport position. As the bale does not rest only on the bale supporting device, a smaller bale supporting device suffices. Both advantages can be achieved as the bale is additionally carried by the bale forming means. Thanks to the more vertical orientation of the bale supporting device the overall length of the bale forming and wrapping apparatus is further reduced. The bale forming and wrapping apparatus with this further reduced length can form and wrap bales. It is possible but not necessary to provide the ability to pivot the bale supporting device into a transport position.

According to the invention a bale is jointly carried in the wrapping position between the bale forming means and the bale supporting device while the bale is wrapped outside of the bale forming chamber. Therefore the bale is sandwiched between the bale forming means and the bale supporting device. It is possible to save a carrying member which is arranged below the bale and carries from below the bale. Such a carrying member may form an obstacle for wrapping the bale or for depositing the bale on the ground. In addition such a carrying device can hit an obstacle on the ground.

According to the invention the bale is wrapped while being sandwiched in the wrapping position. The bale supporting device is in a more vertical orientation. Therefore the center of gravity of a baler-wrapper combination carrying the sandwiched bale is closer to the bale forming chamber and therefore closer to the ground-engaging wheels even if the bale forming chamber is quite empty. The step of depositing a wrapped bale on the ground shifts the center of gravity over a smaller distance than in known balers. The stability of the baler-wrapper combination is increased. This is in many cases of advantage, in particular if the baler-wrapper combination belongs to a vehicle which is moves or is pulled over ground and can be operated in a hilly environment, e.g. to an agricultural harvester.

Thanks to the invention the bale often needs to be moved over a shorter distance when moving it out of the bale forming chamber and into the wrapping position. This saves time and kinetic energy.

A further advantage of sandwiching and wrapping a bale between the bale forming means and the bale supporting device is that the step of wrapping the bale in the bale forming chamber into a net or twine and afterwards wrapping the bale in the wrapping position outside of the bale forming chamber into a plastic sheet can in some implementations be avoided. In contrast the bale is only wrapped outside of the bale forming chamber when being sandwiched in the wrapping position. Thanks to the invention it is possible that the sandwiched bale is kept by the bale forming means and by the bale supporting device in the wrapping position until the bale is wrapped into plastic sheet or further wrapping material. Sandwiching the bale until it is wrapped prevents the bale from falling apart.

This feature saves a device for wrapping the bale in the bale forming chamber into a wrapping net or twine wherein the net or twine is only needed until the bale is wrapped in the wrapping position. Wrapping material is saved. One further advantage of this feature: As soon as the bale is moved out of the bale forming chamber into the wrapping position, the bale forming chamber is available for forming a new bale. The throughput is increased.

### PREFERED EMBODIMENTS

In one embodiment the bale supporting device tends to shift a bale carried in the wrapping position outside of the bale forming chamber against the bale forming means. In a further embodiment the bale forming means tends to shift a bale carried in the wrapping position against the bale supporting device. Both embodiments can be combined such that the bale is pressed from two sides. This combination allows further reducing the overall length of the bale forming and wrapping apparatus without reducing the maximal possible size of a bale which can be formed.

In both embodiments the bale to be wrapped is sandwiched between the bale forming means and the bale supporting device. The bale is securely kept in the wrapping position. The bale forming means is driven and can form and rotate a further bale in the bale forming chamber while the bale being sandwiched in the wrapping position is wrapped. The bale forming means further rotates the bale in the wrapping position. A part of the bale forming means is positioned between a rotated bale in the bale forming chamber - or the empty bale forming chamber - on the one side and a rotated bale sandwiched in the wrapping position on the other side.

According to a preferred embodiment the bale forming means rotates a further bale in the bale forming chamber and can additionally rotate the sandwiched bale while it is wrapped in the wrapping position. This embodiment saves an own drive for the bale supporting device. It suffices that the bale supporting device has idler rollers or further passive rotatable holding members which are in contact with the bale.

In one embodiment the bale forming means can only be driven with constant velocity. In a further embodiment the velocity of the bale forming means can be varied during operation, preferably depending on the process of forming a further bale in the bale forming chamber and/or depending on whether or not a bale is sandwiched in the wrapping position.

In one implementation the bale forming means is moved with a higher velocity when only a further bale in the bale forming chamber is rotated and no bale is sandwiched in the wrapping position. The bale forming means moves with a lower velocity when the bale forming means rotates a bale in the wrapping position. In some cases this embodiment reduces the consumption of wrapping material compared with an embodiment in which the bale forming means is moved with constant velocity. The higher velocity reduces the time required for forming a bale in the bale forming chamber. Thanks to the lower velocity kinetic energy is saved.

A permanent movement of the bale forming means with constant or varying velocity reduces the power consumption and the mechanical stress compared with a start-stop operation. The two processes of forming a bale in the bale forming chamber and of wrapping a further bale in the wrapping position can be performed timely overlapping without the need of an own drive for the bale supporting device. Preferably the belt velocity is changed as just mentioned.

In one embodiment a protecting cover surrounds the bale forming means as well as the bale supporting device. The bale is formed and wrapped under this cover. For ejecting the wrapped bale, a part of the cover is moved such that an aperture is provided.

In one embodiment a stationary casing surrounds a part of the bale forming means and thereby a part of the bale forming chamber. The bale forming chamber is positioned between this stationary casing and the bale supporting device. For moving the bale into the wrapping position the bale is moved away from this stationary casing. The stationary casing and the bale supporting device together surround and protect the bale forming chamber.

In one embodiment the bale supporting device tends to shift the sandwiched bale to be wrapped in the wrapping position against a first segment of an endless elastic pressing belt belonging to the bale forming means. Or the pressing belt tends to shift a sandwiched bale to be wrapped in the wrapping position against the bale supporting device wherein the first segment touches the sandwiched bale. A further segment of this pressing belt partially surrounds the bale forming chamber. The further segment is arranged adjacent to a loose material inlet.

Preferably two parts of the outer surface of the pressing belt touch simultaneously two bales. More precisely: One outer surface part belonging to the first belt segment touches one bale in the wrapping position and a further outer surface part belonging to the second belt segment touches a further bale in the bale forming chamber. In place of one pressing belt several parallel pressing belts can be used.

Both embodiments save the need of a specific casing for the entire bale forming chamber wherein the casing comprises a pivotal casing part, e.g. a casing with a pivotal tailgate (discharge gate), and wherein this casing part can be pivoted into a closed position between the bale forming chamber and the wrapping device. In contrast the bale supporting device additionally serves as a part of a casing for the bale forming means, e.g. as a pivotal discharge gate or as a shield. In addition an actuator for pivoting the pivotal casing part is saved. It is also not necessary to monitor the current position of the pivotal casing part. Time for opening or closing the pivotal casing part is saved. Weight and material consumption are reduced.

In one implementation the bale presence sensor detects the event that a bale is kept in the wrapping position. This sensor can be mounted at the bale supporting device. The detection that a bale is carried can trigger a change of the velocity with which the bale forming means is driven. The event can also trigger the event that a web of wrapping material is pulled from the or one reservoir. It is also possible that the event that a bale is readily formed and is moved out of the bale forming chamber triggers a timer. If the bale presence sensor does not detect a bale in the wrapping position after a given time span has passed, an error has occurred and an alert is generated.

In one embodiment the bale being in the wrapping position is placed between two opposing plates. In the case of a round-cylindrical bale these plates are preferably positioned adjacent to the bale's front faces. The bale forming means, the bale supporting device, and the two plates together form a wrapping site outside of the bale forming chamber. The bale is moved from the bale forming chamber into this wrapping site and is kept there until the bale is wrapped. The bale being in the wrapping site is in the wrapping position. The embodiment with the two plates further reduces the risk that the bale being moved out of the bale forming chamber falls apart. Preferably at least one web of wrapping material is injected into this wrapping site through an inlet extending between the two plates.

In an alternative embodiment a first kind of wrapping material, e.g. a net or twine, is placed in a first wrapping step around a part of the bale's surface while the bale is still kept only by the bale forming means and is spaced apart from the bale supporting device. In a subsequent second wrapping step the bale is kept in the wrapping position. The entire bale surface or a part of the bale's surface is wrapped into a second kind of wrapping material, e.g. into a plastic sheet. The wrapping material which is placed around the bale during the first wrapping steps prevents the bale from falling apart. As the first wrapping step is only performed for preventing the bale from falling apart until the second wrapping step is completed, only one layer or only few layers of the first kind needs to be placed around the bale. It suffices that a part of the bale's surface is wrapped, e.g. the circumferential surface in the case of a round-cylindrical bale.

In one embodiment the process of wrapping the bale is already started before the bale reaches the wrapping position. While performing a first wrapping step, one layer of wrapping material can be placed on a part of the bale surface while the bale is in the bale forming chamber. The bale with this layer is moved out of the bale forming chamber and reaches the wrapping position. This embodiment further reduces the risk that the bale falls apart after being moved out of the bale forming chamber.

In one implementation the bale is in the bale forming chamber while the first wrapping step is performed. With other words: The bale is formed and wrapped in the same chamber. In an alternative implementation the apparatus comprises two chambers:
- a first one (a bale forming chamber, e.g.) for forming the bale and
- a second one (a wrapping chamber, e.g.) for performing the first wrapping step.

Preferably the bale forming means provides both chambers. In one implementation these two bale forming chambers can be formed by two segments of the same pressing belt or of the same ensemble of parallel (side-by-side) pressing belts.

This alternative implementation with two chambers makes it possible that further loose material is injected into the bale forming chamber while the first kind of wrapping material is placed around a bale in the wrapping chamber. In a variation of this alternative implementation loose material is injected into a chamber serving as a buffering chamber or pre-baling chamber while the first kind of wrapping material is placed around a bale in the bale forming chamber wherein this bale forming chamber additionally serves as a wrapping chamber. The bale forming chamber is arranged between the buffering storage and the bale supporting device. If the apparatus comprises a bale forming chamber and a wrapping chamber or a bale forming chamber and additionally a buffering storage, the apparatus may simultaneously carry three bales:
- a first increasing bale in the bale forming chamber or in the buffering or pre-baling chamber,
- a second bale in the wrapping chamber or in the bale forming chamber additionally serving as the bale forming chamber wherein the second bale is subjected to the first wrapping step, and
- a third bale in the wrapping position outside of both chambers wherein the third bale is subjected to the second wrapping step.

These embodiments with two chambers or with an additional buffering storage as well as the embodiments in which the bale is not wrapped in the bale forming chamber provides a bale forming and wrapping apparatus which can operate in a continuous manner, i.e. needs not to be stopped while a net or several strands of twine are placed around a bale in the bale forming or wrapping chamber provided by the bale forming means. In contrast one bale can be wrapped while being carried in the wrapping position between the bale forming means and the bale supporting device and a further bale is created in the bale forming chamber or buffering or pre-baling chamber. The throughput through the baler is increased. The operation of the bale is simplified.

Preferably the bale supporting device comprises a frame and several moveable members, e.g. at least one belt guided around several deflecting rollers wherein the rollers are rotatably mounted at the frame. The or every movable member contacts the bale in the wrapping position.

In one implementation the frame of the bale supporting device is stationary. In a further embodiment the bale supporting frame and thereby the entire bale supporting device is pivotally mounted. A bale supporting device pivoting actuator can pivot the bale supporting device around a horizontal pivoting axis. If the apparatus is part of a vehicle, the pivoting axis is preferably perpendicular to the vehicle's travelling direction. In the embodiment with the reservoir moving device this pivoting axis is preferably parallel to the holder guiding plane in which the or every reservoir holder is guided around the sandwiched bale. This embodiment makes it easier to wrap the entire bale which is sandwiched in the wrapping position.

The feature with the bale supporting device pivoting actuator makes it even easier to deposit a wrapped bale onto the ground after the bale in the wrapping position has been wrapped: It suffices to pivot the bale supporting device such that the wrapped bale is no longer carried by the pivotal bale supporting device. Thanks to the force of gravity the wrapped bale drops onto the ground. In addition it is easier to transfer a bale from the bale forming chamber to the wrapping position outside of the bale forming chamber: The bale supporting device being in a horizontal or an upwardly sloping orientation (seen in a viewing direction from the chamber to the bale supporting device) takes the bale after the bale is removed out of the bale forming chamber. Afterwards the bale supporting device is pivoted into a more vertical orientation. Thereby the bale is sandwiched. The bale in the wrapping position is wrapped.

It is further possible to adapt the pivotal position of the bale supporting device to a parameter of the bale, e.g. to the diameter of a round-cylindrical bale to be wrapped, or to the current inclination of the bale forming and wrapping apparatus. Using the measured inclination is in particular reasonable if the apparatus is part of a vehicle which is moved over ground. In the first implementation a bale size sensor measures the size of the bale in the bale forming chamber. In the second implementation an inclination sensor measures at least one inclination of the vehicle, i.e. the tilting angle of the vehicle around a horizontal axis parallel and/or perpendicular to the vehicle travelling direction. The step of adapting the bale supporting device can be made before the bale to be wrapped is transferred into the wrapping position.

In a further implementation the bale supporting device can linearly be shifted with respect to the bale forming means such that the distance between the bale supporting device and the bale forming means is varied. In one embodiment the bale supporting device is shifted in order to drop the wrapped bale on the ground. In one embodiment the bale supporting device is shifted in order to adapt the bale supporting device to the bale which is to be wrapped in the bale in the wrapping position. In this embodiment the bale supporting device is shifted depending on a parameter of the bale in the wrapping position, e.g. a bale diameter or further bale dimension or on an inclination of the baler.

In one implementation an actuator shifts the bale supporting device linearly with respect to the bale forming means. Preferably the shifting direction is substantially horizontal. In the case of a bale forming and wrapping apparatus being part of a vehicle the shifting direction is preferably opposite (antiparallel) to the travelling direction of the vehicle. It is possible that the actuator shifts the bale supporting device against the retaining force of a retaining device which tends to shift the bale supporting device towards the bale forming means.

According to the invention the bale in the wrapping position is wrapped into wrapping material taken from the or from at least one reservoir. In order to wrap the bale, the bale is moved with respect to the or one reservoir. In one embodiment the bale in the wrapping position is rotated. In the case of a round-cylindrical bale the bale is rotated around its center axis.

In one embodiment the or every reservoir holder is kept stationary and only the bale in the wrapping position is moved. In an alternative embodiment, however, the wrapping device comprises a reservoir moving device. This reservoir moving device moves the or every reservoir holder around a rotated bale which is carried in the wrapping position. This embodiment enables to wrap the entire surface of the bale while the bale is in the wrapping position.

According to one embodiment the reservoir moving device guides the or every reservoir holder in a holder guiding plane around the bale in the wrapping position. This holder guiding plane is vertical or is angularly sloping. Preferably the or every reservoir holder is rotated around a rotating axis which is perpendicular to the holder guiding plane and therefore horizontal or is sloping and is perpendicular to the center axis of the bale in the wrapping position. In the case of a vehicle this rotating axis is preferably substantially parallel to the travelling direction. This orientation of the holder guiding plane leads to a bale forming and wrapping apparatus with a further reduced length - compared with a baler-wrapper combination providing a horizontal or sloping holder guiding plane.

Preferably the reservoir moving device moves at least two reservoir holders around the bale carried in the wrapping position. Or two webs are pulled from two stationary reservoir holders. In both embodiments at least two webs of wrapping material are simultaneously placed on the bale surface. The embodiment with several wrapping material reservoirs reduces the time required for wrapping the bale - compared with using only one reservoir. If the reservoir kept by one reservoir holder is empty or if one web of wrapping material gets torn or if one reservoir holder malfunctions, the process of wrapping the bale can nevertheless be continued with the wrapping material from the other reservoir holder. In one implementation the step that one reservoir is empty or one reservoir holder malfunctions triggers at least one of the following steps which compensate at least partially the reduced performance and which can be triggered automatically without requiring a repair action performed by a human operator:
- The reservoir moving device is moved with a higher velocity, e.g. with the double velocity.
- The bale in the wrapping position is rotated with a higher velocity.
- The remaining time for wrapping the bale is increased, e.g. doubled.

The reservoir moving device can comprise a rotatable torus (wrapping ring) on which the or every reservoir holder is mounted. This wrapping ring extends in the holder guiding plane and is preferably driven around its own center axis. In one embodiment the wrapping ring can automatically be pivoted or shifted during operation with respect to the bale supporting device such that the respective position of the or every reservoir holder is adapted to the size of the bale in the wrapping position and/or to the inclination of a vehicle comprising the bale forming and wrapping apparatus.

In a further embodiment the or every reservoir holder is kept on a free end of a wrapping arm. The or every wrapping arm is moved around the bale kept in the wrapping position. In one implementation the or every wrapping arm can linearly be moved, e.g. upwards and downwards.

In one embodiment the bale is rotated around a bale rotating axis while the bale is carried between the bale supporting device and the bale forming means and thereby kept in the wrapping position. The reservoir moving device moves the or every reservoir holder in a holder guiding plane around the bale. The bale rotating axis is in this holder guiding plane or is parallel to this holder guiding plane. The bale in the wrapping position is wrapped by a superposition of two movements of the or every reservoir with respect to the bale:
- the rotation of the sandwiched bale and
- the movement of the or at least one holder carrying a wrapping material reservoir around the rotated bale.

This embodiment ensures that the entire surface of the bale is wrapped while the bale is in the wrapping position.

It is also possible that at least one wrap of wrapping material is pulled from a stationary reservoir holder. A web feeding member feeds a web towards the bale being kept in the wrapping position and being rotated. The web is injected into the space between the rotated bale on the one side and the bale forming means or the bale supporting device on the other side. This embodiment saves a reservoir moving device.

According to the invention the bale to be wrapped is moved out of the bale forming chamber into the wrapping position. Different embodiments how to move the bale are possible.

In one embodiment of the bale forming means a pivotal holding member carries a moveable bale forming member, e.g. at least one roller, at one free end of the holding member and surrounds the bale forming chamber. It is possible that several pivotal holding members carry several moveable bale forming members. Preferably at least one pressing belt is guided over the or every moveable bale forming member mounted at a pivotal holding member. Or the rollers on the holding member are pressing rollers and contact the bale in the bale forming chamber. A holding member actuator can pivot the pivotal holding member towards the bale supporting device. In a further embodiment an actuator touches the surface of the bale in the bale forming chamber. The actuator shifts the bale out of the bale forming chamber into a position between the bale forming means and the bale supporting device.

Pivoting the or every holding member or the operation of the actuator causes a bale in the bale forming chamber to be moved out of the bale forming chamber and into the sandwiched position between the bale forming means and the bale supporting device. In one embodiment the bale forming chamber is now empty. The bale forming means can now start with the formation of a new bale in the bale forming chamber. Simultaneously the moved bale can be wrapped when being carried in the wrapping position between the bale forming means and the bale supporting device.

Preferably the bale forming chamber is positioned between two such pivotal holding members carrying two bale forming members. In one implementation the or every pressing belt is guided by these bale forming members. A segment of the pressing belt(s) between these two bale forming members defines and partially surrounds this bale forming chamber.

It is possible that the bale is already in the wrapping position after having been moved by means of the or one holding member actuator. It is also possible that the bale is first moved into an intermediate position between the bale forming means and the bale supporting device. It is possible to start the process of placing a web on the bale's surface when the bale is in the intermediate position. Afterwards the bale supporting device is moved and the bale is thereby moved from the intermediate position into the wrapping position.

In one embodiment an operator can select one operating mode out of the following options:
- form a bale, wrap it in the wrapping position, and deposit the wrapped bale on the ground (wrapping option),
- form and deposit a bale without wrapping it in the wrapping position (no-wrap option).

If the operator has selected the wrapping option, the formed bale is kept in the wrapping position between the bale forming means and the bale supporting device and is wrapped. If the operator has selected the no-wrap option, however, the formed bale is deposited on the ground without being kept and wrapped in the wrapping position. Preferably the step of selecting the no-wrap option triggers the following operation: The bale supporting device is pivoted such that the bale is moved out of the bale forming chamber and below the bale supporting device onto the ground.

The invention can be used in a bale forming and wrapping apparatus which belongs to a vehicle. This vehicle is moved over ground and forms and wraps bales. The bale supporting device is preferably behind the bale forming means. In one application the vehicle picks up loose material from the ground while being moved. In a further application loose material is dropped on a conveyor which conveys the loose material into the bale forming chamber. In the embodiment with the pivotal bale supporting device the pivoting axis is preferably perpendicular to the travelling direction of the vehicle. The vehicle can be an agricultural harvester or a cleaning vehicle. Preferably the bale forming chamber is drum-shaped and has a center axis perpendicular to the travelling direction of the vehicle. The vehicle can comprise an own motor or is operated as a pulled implement.

In one embodiment a tilting unit is positioned at the rear edge of the vehicle. The tilting unit tilts a round-cylindrical bale onto one front face after the bale in the wrapping position has been wrapped and the wrapped bale is deposited. The bale on the front face can hardly roll downwards.

The invention can also be used in a stationary plant which forms bales from recycling material, e. g. waste, cartridges, paper.

These and other aspects of the invention and of the preferred embodiment will be even more apparent from the detailed embodiment as described below and will be elucidated in detail there.

### BRIEF DESCRIPTION OF THE DRAWINGS

Fig. 1 shows schematically in a side view a continuous baler according to the invention;
Fig. 2 shows the baler of Fig. 1 from behind, i.e. in a viewing direction parallel to the travelling direction.

### DETAILED DESCRIPTION OF EMBODIMENT

Fig. 1 shows schematically a bale forming and wrapping apparatus 1 (in the following: baler 1) according to the invention. The baler 1 is mechanically connected with a pulling tractor 42 (only the rear tractor part is shown) via a towing unit 4. The tractor 42 pulls the baler 1 over ground 6 in a travelling direction TD (in Fig. 1 from right to left). Fig. 1 shows the baler 1 from the left side (seen in the travelling direction TD). Fig. 2 shows the baler 1 from behind. The travelling direction TD is perpendicular to the drawing plane of Fig. 2.

A baler frame 2 is carried by two wheels 3. A pick-up unit 5 picks up loose crop material (grass, hay, straw, silage, e.g.) from the ground 6. The picked-up crop material is conveyed through a feeding channel with the inlet 7 and the outlet 8 backwards (opposite to the travelling direction TD), e.g. by a conveying rotor engaging into the feeding channel. Two driven starter rollers 36.l (lower roller) and 36.u (upper roller) form the two borders of the outlet 8. Preferably several longitudinal ribs are mounted on the circumferential surfaces of the starter rollers 36.l, 36.u.

The outlet 8 guides conveyed crop material into a drum-shaped bale forming chamber. In the situation shown in Fig. 1 an increasing round-cylindrical bale B2 is currently formed from picked-up loose crop material injected into this bale forming chamber.

In the embodiment one pressing belt 10 surrounds the entire width (dimension perpendicular to the travelling direction TD and perpendicular to the drawing plane of Fig. 1) of the bale forming chamber and extends nearly from sidewall to sidewall. It is also possible that several parallel (side-by-side) pressing belts surround the bale forming chamber.

Seen in the travelling direction TD a front part of the or every pressing belt 10 is surrounded by a stationary casing. This casing thereby partially surrounds the bale forming chamber. A rear part of the or every pressing belt 10 is not covered such that the or every pressing belt 10 can contribute to carry a bale in the wrapping position (to be explained below). In one implementation the casing provides a front wall and two sidewalls for the bale forming chamber whereas the or every pressing belt 10 belongs to the rear casing part.

The or every pressing belt 10 is guided over several deflecting and guiding rollers, among them
- the moveable guiding roller pairs 11a, 11b, 11c, 11d,
- the stationary guiding rollers 12, and
- the moveable guiding roller 13.

The guiding roller 13 is mounted on a pivotal tensioning device 14. The roller 13 is rotatably mounted between the free ends of two tensioning arms of the tensioning device 14. The tensioning device 14 can be pivoted against the retaining force of a retaining device (not shown). Or an actuator can actively pivot the tensioning device 14 against the expanding force of the compressed crop material in the bale forming chamber. In both cases the pressure which the or every belt 10 applies onto the crop material in the bale forming chamber and onto a bale B in the wrapping position (to be explained below) is controlled. The pressure applied onto the crop material increases but is kept below a given pressure threshold.

The stationary guiding rollers 12 can only rotate around their own rotational axes but cannot be shifted laterally, i.e. perpendicular to the respective rotating axis. At least one stationary roller 12 is driven and moves the or every pressing belt 10 (in Fig. 1 anti-clockwise). The bale forming chamber in which the bale B2 is currently created is delimited by a segment 41.1 of the pressing belt 10 and by the two driven starter rollers 36.l, 36.u adjacent to the outlet 8. The bale forming chamber increases against the tension of the pressing belt 10 as further picked-up crop material is injected into it.

In one implementation the driven roller 12 rotates with the same velocity during the entire operation such that the or every pressing belt 10 moves with constant velocity. In a further implementation the roller rotational velocity and thereby the belt velocity can be changed during operation.

Four holding arms 15 can pivot around a common pivoting axis 17. Every pivotal holding arm 15 is pivotally mounted on a common rotatable arm holder 16 which can rotate around the pivoting axis 17 (perpendicular to the drawing plane of Fig. 1). Every arm 15 carries a pair of deflecting and guiding roller pairs 11a, 11b, 11c, 11d. Every roller pair 11a, 11b, 11c, 11d can slightly pivot with respect to the respective holding arm 15 around an axis parallel to the pivoting axis 17. Every roller of such a roller pair 11a, ..., 11d is rotatably mounted between a left arm member and a right arm member.

In the embodiment the deflecting roller pairs 11a, ..., 11d are guided by a guiding rail system 19 comprising a left rail and a right rail. This guiding rail system 19 is positioned adjacent to the outlet 9. Currently the guiding roller pairs 11c, 11d are guided by the guiding rail system 19.

A respective hydraulic actuator 18 is assigned to every holding arm 15 and can pivot the assigned holding arm 15 with respect to the arm holder 16 around the common pivoting axis 17. This actuator 18 comprises two piston-cylinder devices (a left one and a right one). Every holding arm 15 can be pivoted around the axis 17 with respect to the rotatable arm holder 16 independently from the other three holding arms 15.

The baler 1 according to Fig. 1 operates as a continuous baler, i.e. needs to be stopped for wrapping a bale in the bale forming chamber or in the wrapping position. A new bale B2 is formed in the bale forming chamber which is currently defined and partially surrounded by the segment 41.1 of the pressing belt 10 between the guiding roller pairs 11c and 11d and which is permanently limited by the starter rollers 36.l, 36.u. The new bale B2 increases until its diameter reaches a given threshold. The next bale will be formed in a bale forming chamber surrounded by a belt segment between the roller pairs 11c, 11b. While the bale B2 is formed and increases, an already formed bale B being in the wrapping position is wrapped. In the situation shown in Fig. 1 the baler 1 simultaneously carries two bales B2 and B. For enabling this continuous operation the baler 1 of the embodiment has the four pair of deflecting roller pairs 11a, 11b, 11c, 11d and the corresponding holding arms 15 and the actuators 18 as described above.

The bale B currently to be wrapped in the wrapping position was formed by means of a segment 41.2 of the pressing belt 10. As long as the bale B is wrapped, this segment 41.2 is permanently positioned between the roller pairs 11a and 11b. After the bale B was entirely formed in the bale forming chamber surrounded by the segment 41.2, the actuator 18 has rotated the arms 15 around the axis 17 into the position shown in Fig. 1. This rotation has moved the bale B out of the bale forming chamber and has shifted the belt segment 41.1 in a position adjacent to the outlet 8. This belt segment 41.1 is now positioned between the roller pairs 11c and 11d and now defines the bale forming chamber in which the new bale B2 is formed.

In one implementation the circumferential surface of the bale B has been wrapped in a first wrapping step into a net or into several twine strands. For placing the net or the twine strands around the bale B the bale B was kept by a segment of the belt 10 positioned above the wheel 3 (now between the roller pairs 11b and 11a). In the situation shown in Fig. 1 the entire surface of the bale B is further wrapped in a subsequent second wrapping step into an impermeable cover of plastic sheet.

In the first conveying step the net or several twine strands have been placed around the bale B after the bale B has reached its final diameter. In a further embodiment such a first wrapping step is saved. The bale B is only wrapped while being kept in the wrapping position.

In the situation shown in Fig. 1 the bale B is carried in the wrapping position and is wrapped simultaneously into two webs of plastic sheet. Two reel holders 30.1, 30.2 carry two supply reels with plastic sheet. A driven reel guiding ring 33 (wrapping ring) in the form of a torus carries the two reel holders 30.1, 30.2 and moves and guides the reel holders 30.1, 30.2 around the bale B which is kept in the wrapping position and is to be wrapped. In the embodiment the guiding ring 33 moves the two reel holders 30.1, 30.2 in a vertical holder guiding plane HGP being perpendicular to the drawing plane of Fig. 1 and in the drawing plane of Fig. 2.

Every supply reel serves as a wrapping material reservoir and every reel holder 30.1, 30.2 serves as a reservoir holder. The guiding ring 33 serves as the reservoir moving device.

The reel guiding ring 33 is guided and moved around a horizontal axis parallel to the travelling direction TD of the baler 1. A drive (not shown) rotates the reel guiding ring 33. The round-cylindrical bale B itself is rotated around its own center axis (perpendicular to the drawing plane of Fig. 1). This bale rotation is caused by the continuous movement of the or every pressing belt 10. The holding arms 15 are not moved while the bale B in the wrapping position is wrapped. The center axis of the round-cylindrical bale B is perpendicular to the travelling direction TD and to the drawing plane of Fig. 1 and is horizontal. The entire surface of the bale B is wrapped.

In the embodiment two rollers 32.l, 32.u are rotatably mounted between a left frame part 31.l and a right frame part 31.r of a wrapping table frame, cf. Fig. 2. In one implementation at least one roller 32.l, 32.r is driven and contributes to rotate the bale B. In a further implementation both rollers 32.l, 32.r are idler rollers.

In one implementation the two rollers 32.l, 32.u are in contact with the sandwiched bale B while the bale B is rotated around its own center axis. In a further implementation several parallel endless bale supporting belts 35.l, 35.r (shown in Fig. 2) are guided around the two rollers 32.l, 32.u. These bale supporting belts 35.l, 35.r touch the circumferential surface of the bale B in the wrapping position. Compared with an implementation without belts a larger part of the bale's circumferential surface is covered. In the implementation with at least one driven roller 32.l, 32.r the bale supporting belts 35.l, 35.r are moved and contribute to rotate the bale B. The embodiment with idler rollers 32.l, 32.r can be combined with the bale supporting belts 35.l, 35.r.

The two rollers 32.l, 32.u, the wrapping table frame 31.l, 31.r, and in one embodiment the endless bale supporting belts 35.l, 35.r guided around the rollers 32.l, 32.u belong to a bale supporting device 9.

In one implementation a wrapping site surrounds the bale B while the bale B is kept in the wrapping position and is wrapped. This wrapping site is delimited by
- the or every pressing belt 10 (in the situation shown in Fig. 1 by the belt segment 41.2),
- the bale supporting device 9, and
- two lateral plates 44.l, 44.r which are positioned adjacent to the bale's front faces of the round-cylindrical bale B being in the wrapping position.

The rear ends of these plates 44.l, 44.r are near the reel guiding ring 33 and the reel holders 30.1, 30.2. This embodiment is in particular useful if the bale B is not wrapped in the bale forming chamber. It prevents the bale B from falling apart. A wrapping material inlet in the form of a horizontal nip extends from the left plate 44.l to the right plate 44.r.

In the embodiments with and without the wrapping site the wrapping table frame 31.l, 31.r presses the rollers 32.l, 32.u and in one embodiment the endless bale supporting belts 35.l, 35.r in a horizontal direction against the rotated bale B. The rotated bale B is on the one side carried by the rollers 32.l, 32.u of the bale supporting device 9 or by the bale supporting belts 35.l, 35.r and from the other side by the or at least one pressing belt 10. Thereby the sandwiched bale B is kept and rotated in the wrapping position.

In one preferred implementation the sandwiched bale B in the wrapping position is only rotated by the or at least one pressing belt 10. The rollers 32.l, 32.u are idler rollers. The idler rollers 32.l, 32.u and the bale supporting belts 35.l, 35.r are used for supporting the bale B. No further drive for rotating the bale B being in the wrapping position is necessary.

In one implementation the or every pressing belt 10 moves with constant velocity during the entire operation - regardless whether or not a bale B is sandwiched in the wrapping position. In a further implementation the or every pressing belt 10 is selectively conveyed with a higher and with a lower velocity during operation. The or every belt 10 is conveyed with the lower velocity when a bale B is sandwiched between the belt 10 and the bale supporting device 9. The lower velocity is adapted to the rotational speed with which the reel holders 30.1, 30.2 are moved around the bale B. It is possible that the lower velocity of the belt 10 is adapted to the diameter of the sandwiched bale B. The belt 10 is moved with the higher velocity when no bale B is sandwiched and when a bale B2 is formed in the bale forming chamber.

In one implementation the bale supporting device 9 comprises an own drive which rotates the rollers 32.l, 32.u. The invention, however, saves the need for such an own drive and for synchronizing such a drive with the drive for the belt 10. In a preferred implementation the rollers 32.l, 32.u are idler rollers such that the bale supporting device 9 does not comprise an own drive. The sandwiched bale B is only rotated by the or at least one pressing belt 10. Also in this implementation the bale supporting device 9 and the pressing belt 10 together keep the sandwiched bale B in the wrapping position.

The bale B and the increasing further bale B2 tension the or every pressing belt 10. For maintaining and controlling the belt tension the tensioning device 14 is pivoted against the retaining force of the retaining device (not shown). The increasing bale B2 and the retaining force further tension the pressing belt 10. The segment 41.2 of the tensioned pressing belt 10 presses the bale B against the bale supporting device 9. By pivoting the tensioning device 14 it is possible to maintain the tension of the or every pressing belt 10 and therefore the pressure applied onto the bale B2 and the force onto the bale B near a given value. It is also possible that an actuator actively pivots the tensioning device 14 and controls the tension of the or every pressing belt 10.

The bale B in the wrapping position is rotated around its own horizontal center axis (perpendicular to the drawing plane of Fig. 1 and in the drawing plane of Fig. 2). The reel guiding ring 33 is rotated around the bale B until a required number of layers of plastic sheet are pulled from the supply reels kept by the rotated reel holders 30.1, 30.2 and are placed onto the bale B. Afterwards the two webs pulled from the two supply reels are severed. After the webs have been severed, the wrapping ring 33 moves and keeps the reel holders 30.1 and 30.2 into positions left and right of the bale B. The rotation of the wrapping ring 33 is terminated such that the reel holders 30.1, 30.2 are kept in their lateral positions.

The wrapped bale B is deposited onto the ground. For doing so, the bale supporting device 9 is pivoted around a horizontal pivoting axis 34 being parallel to the bale's center axis and perpendicular to the travelling direction TD and the drawing plane of Fig. 1. Thanks to the force of gravity the wrapped bale drops onto the ground 6.

In one embodiment (not shown) the wrapped bale B rolls over a pivotal ramp onto the ground. Preferably a spring tends to pivot the ramp upwards. The movement of the wrapped bale B over the ramp decelerates the rotational velocity of the bale B to be deposited.

It is further possible that a tilting device tilts the wrapped bale B onto one front face of the bale. This tilting unit is positioned below the bale supporting device 9 and can comprise one rod which extends parallel to the travelling direction TD and which is mounted with an offset to the longitudinal axis of the baler 1.

Reference signs used in the claims will not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 1 | bale forming and wrapping apparatus (baler) |
| 4 | towing unit of the baler 1 |
| 5 | pick-up unit |
| 6 | ground over which the bale forming and wrapping apparatus 1 is pulled |
| 7 | crop material inlet |
| 8 | crop material outlet between the starter rollers 36.l, 36.u, guides into the bale forming chamber |
| 9 | pivotal bale supporting device (wrapping table) with the wrapping table frame 31.l, 31.r, the driven rollers or idler rollers 32.l, 32.u, and the bale supporting belts 35.l, 35.r |
| 10 | pressing belt(s) guided around the deflecting roller pairs 11a, 11b, 11c, 11 d and around the rollers 12, 13 |
| 11a, 11b, 11c, 11d | pairs of deflecting rollers mounted on the four pivotal holding arms 15 |
| 12 | stationary deflecting rollers for the pressing belt(s) 10 |
| 13 | moveable deflecting roller for the pressing belt(s) 10, mounted on the pivotal tensioning device 14 |
| 14 | pivotal tensioning device, carries the moveable deflecting roller 13 |
| 15 | pivotal holding arms for the four deflecting roller pairs 11a, 11b, 11c, 11d |
| 16 | rotatable arm holder, carries the four holding arms 15 |
| 17 | pivoting axis of the arm holder 16, serves as the common pivoting axis for the four pivotal holding arms 15 |
| 18 | hydraulic actuators for the pivotal holding arms 15 |
| 19 | guiding rail system for that two pairs of deflecting rollers which is currently adjacent to the outlet 8, in the situation shown in Fig. 1 the pairs 11c and 11d |
| 30.1, 30.2 | reel holders mounted on the guiding ring 33, keep two supply reels with wrapping material |
| 31.l, 31.r | left and right carriers of the wrapping table frame, carry the rollers 32.l, 32.u between them |
| 32.l, 32.u | lower and upper driven or idler rollers of the bale supporting device 9, are mounted between the carriers 31.l, 31.r of the wrapping table frame |
| 33 | guiding ring for the holders 30.1, 30.2, extends in the vertical holder guiding plane HGP |
| 34 | horizontal pivoting axis of the wrapping table frame 31.l, 31.r, is positioned perpendicular to the travelling direction TD |
| 35.l, 35. r | left and right bale supporting belts, guided around the rollers 32.l, 32.u |
| 36.l, 36.u | lower and upper driven starter rollers, form the borders of the outlet 8 and limit the bale forming chamber |
| 40 | wrapping device, comprises the bale supporting device 9, the guiding ring 33, and the holders 30.1, 30.2 |
| 41.1 | segment of the belt 10 between the roller pairs 11c and 11 d which currently surrounds the bale forming chamber in which the bale B2 is formed |
| 41.2 | segment of the belt 10 between the roller pairs 11 d and 11b which currently keeps the bale B in the wrapping position |
| 42 | pulling tractor |
| 44.l, 44.r | parallel plates between which the wrapping site is provided |
| B | bale to be wrapped in plastic sheet, held in the wrapping position between the or at least one pressing belt 10 and the bale supporting device 9 |
| B2 | further bale, increases in the bale forming chamber which is surrounded by the starter rollers 32.l, 32.u and the belt segment 41.1 between the roller pairs 11c, 11 d |
| HGP | vertical holder guiding plane in which the guiding ring 33 is rotated |
| TD | travelling direction of the baler 1 |

## Claims

1. Bale forming and wrapping apparatus (1) comprising
- a bale forming means (10, 11a, 11b, 11c, 11d, 12, 13, 15, 18) and
- a wrapping device (40),
wherein the wrapping device (40) comprises
- at least one reservoir holder (30.1, 30.2) for holding a reservoir with wrapping material and
- a bale supporting device (9),
wherein the bale forming means (10, 11a, 11b, 11c, 11d, 12, 13, 15, 18)
- provides a bale forming chamber and
- is arranged to form a bale (B2) in the provided bale forming chamber,
wherein the wrapping device (40) is positioned outside of the provided bale forming chamber,
wherein the bale forming and wrapping apparatus (1) is arranged
- to move a formed bale (B) out of the bale forming chamber and
- to carry the moved bale (B) in a wrapping position outside of the bale forming chamber, and
wherein the bale forming and wrapping apparatus (1) is further arranged to wrap the bale (B) carried in the wrapping position into wrapping material taken from the or from at least one reservoir,
wherein the bale supporting device (9) and the bale forming means (10, 11a, 11b, 11c, 11d, 12, 13, 15, 18) are arranged
- to jointly carry a bale (B) being in the wrapping position outside of the bale forming chamber and
- to enable a rotation of the carried bale (B),
wherein the bale (B) carried in the wrapping position is positioned between
- the bale supporting device (9) and
- the bale forming means (10, 11a, 11b, 11c, 11d, 12, 13, 15, 18), and
wherein the bale forming and wrapping apparatus (1) is arranged to rotate and to wrap the bale (B) while the bale (B) is jointly carried in the wrapping position **characterised in that** the wrapping device (40) further comprises a reservoir moving device (33),
wherein the reservoir moving device (33) is arranged to move the or every reservoir holder (30.1, 30.2) around the bale (B) carried in the wrapping position.

2. Bale forming and wrapping apparatus according to claim 1,
**characterised in that**
the reservoir moving device (33) is arranged to move the or every reservoir holder (30.1, 30.2) in a holder guiding plane (HGP) around a bale (B) which is carried in the wrapping position,
wherein the holder guiding plane (HGP) is in a vertical orientation or is angularly sloping.

3. Bale forming and wrapping apparatus according to one of the claims 1 or 2,
**characterised in that**
the reservoir moving device comprises a reservoir moving ring (33),
wherein the reservoir moving ring (33) is positioned
- between the bale supporting device (9) and
- the bale forming means (10, 11a, 11b, 11c, 11d, 12, 13, 15, 18),
wherein the or every reservoir holder (30.1, 30.2) is mounted on the reservoir moving ring (33), and
wherein the reservoir moving ring (33) is adapted to move the or every reservoir holder (30.1, 30.2) around a bale (B) which is carried in the wrapping position.

4. Bale forming and wrapping apparatus according to one of the claims 1 to 3,
**characterised in that**
the reservoir moving device (33) comprises at least one reservoir moving arm for carrying the or one reservoir holder (30.1, 30.2) around a bale (B) which is carried in the wrapping position,
wherein the reservoir moving device (33) is arranged to move the or every reservoir moving arm around a bale (B) which is carried in the wrapping position.

5. Bale forming and wrapping apparatus according to claim 4,
**characterised in that**
the or every reservoir moving arm is positioned between
- the bale supporting device (9) and
- the bale forming means (10, 11a, 11b, 11c, 11d, 12, 13, 15, 18).

6. Bale forming and wrapping apparatus according to any previous claim,
**characterised in that**
the bale forming means (10, 11a, 11b, 11c, 11d, 12, 13, 15, 18) is arranged to rotate a further bale (B2) in the bale forming chamber,
wherein the bale forming means (10, 11a, 11b, 11c, 11d, 12, 13, 15, 18) is further arranged to rotate the bale (B) which is jointly carried in the wrapping position.

7. Bale forming and wrapping apparatus according to claim 6,
**characterised in that**
the bale forming means (10, 11a, 11b, 11c, 11d, 12, 13, 15, 18) is arranged to rotate with at least two different velocities,
wherein the velocity of the bale forming means (10, 11a, 11b, 11c, 11d, 12, 13, 15, 18) depends on whether or not the bale forming means (10, 11a, 11b, 11c, 11d, 12, 13, 15, 18) and the bale supporting device (9) currently carries a bale (B) in the wrapping position.

8. Bale forming and wrapping apparatus according to one of the preceding claims,
**characterised in that**
the or every reservoir holder (30.1, 30.2) is positioned between
- the bale supporting device (9) and
- the bale forming means (10, 11a, 11b, 11c, 11d, 12, 13, 15, 18).

9. Bale forming and wrapping apparatus according to one of the preceding claims,
**characterised in that**
the bale supporting device (9) comprises
- an upper bale supporting roller (32.u) and
- a lower bale supporting roller (32.l).
wherein the upper bale supporting roller (32.u) is positioned vertically or angularly above the lower bale supporting roller (32.l) and
wherein both bale supporting rollers (32.l, 32.u) are arranged
- to contact a bale (B) carried in the wrapping position or
- to guide at least one belt (35.l, 35.r) which contacts the bale (B) carried in the wrapping position.

10. Bale forming and wrapping apparatus according to claim 9,
**characterised in that**
the two bale supporting rollers (32.1, 32.u) are rotatable around two parallel rotating axes and
the wrapping device (40) comprises a reservoir moving device (33),
wherein the reservoir moving device (33) is arranged to move the or every reservoir holder (30.1, 30.2) in a holder guiding plane (HGP) around a bale (B) which is carried in the wrapping position,
wherein the two roller rotating axes are in the or parallel to the holder guiding plane (HGP).

11. Bale forming and wrapping apparatus according to claim 9 or 10,
**characterised in that**
the two bale supporting rollers (32.l, 32.u) are idler rollers.

12. Bale forming and wrapping apparatus according to one of the preceding claims,
**characterised in that**
the bale supporting device (9) is pivotally mounted,
wherein the pivoting axis (34) of the bale supporting device (9) is horizontal and wherein the wrapping device (40) comprises a pivoting actuator for pivoting the bale supporting device (9) around this pivoting axis (34).

13. Bale forming and wrapping apparatus according to claim 12,
**characterised in that**
the wrapping device (40) comprises a reservoir moving device (33),
wherein the reservoir moving device (33) is arranged to move the or every reservoir holder (30.1, 30.2) in a holder guiding plane (HGP) around a bale (B) which is carried in the wrapping position,
wherein the pivoting axis (34) of the bale supporting device (9) is in the or parallel to the holder guiding plane (HGP).

14. Method for forming and wrapping a bale (B),
wherein the method is performed by using a bale forming and wrapping apparatus (1) comprising
- a bale forming means (10, 11a, 11b, 11c, 11d, 12, 13, 15, 18) and
- a wrapping device (40),
wherein the wrapping device (40) comprises
- at least one reservoir holder (30.1, 30.2) for holding a reservoir with wrapping material
- a reservoir moving device (33) for moving the or every reservoir holder (30.1, 30.2), and
- a bale supporting device (9),
wherein the method comprises the steps that
- the bale forming means (10, 11a, 11b, 11c, 11d, 12, 13, 15, 18) provides at least temporarily and partially delimits a bale forming chamber,
- the bale forming means (10, 11a, 11b, 11c, 11d, 12, 13, 15, 18) forms the bale (B) in the provided bale forming chamber,
- the bale forming means (10, 11a, 11b, 11c, 11d, 12, 13, 15, 18) moves the formed bale (B) out of the bale forming chamber into a wrapping position outside of the bale forming chamber, and
- the bale (B) is subsequently wrapped in the wrapping position outside of the bale forming chamber, and
wherein the step that the bale (B) is wrapped in the wrapping position comprises the steps that
- the bale (B) is rotatably carried in the wrapping position and
- the bale (B) is wrapped into wrapping material which is taken from the or from at least one reservoir,
**characterised in that**
the step that the bale (B) is wrapped additionally comprises the steps that the bale (B) is jointly carried by
- the bale supporting device (9) and
- the bale forming means (10, 11a, 11b, 11c, 11d, 12, 13, 15, 18)
while the bale (B) is kept in the wrapping position and is wrapped, and
the reservoir moving device (33) moves the or every reservoir holder (30.1, 30.2) around the bale (B) jointly carried in the wrapping position; and
wherein the bale (B) in the wrapping position
- is positioned between the bale supporting device (9) and the bale forming means (10, 11a, 11b, 11c, 11d, 12, 13, 15, 18) and
- is rotated.

15. Bale forming and wrapping method according to claim 14,
**characterised in that**
the method comprises the further step that
the bale forming means forms a further bale (B2) in the bale forming chamber, wherein the steps that
- the bale (B) is wrapped in the wrapping position and
- the further bale (B2) is formed in the bale forming chamber
are performed timely overlapping.

## Patentansprüche

1. Ballenform- und -einwickelvorrichtung (1), mit:
- einem Ballenformmittel (10, 11a, 11b, 11c, 11d, 12, 13, 15, 18) und
- einer Einwickelvorrichtung (40),
wobei die Einwickelvorrichtung (40) das Folgende aufweist:
- mindestens eine Vorratsaufnahme (30.1, 30.2) zum Aufnehmen eines Vorrats an Wickelmaterial und
- eine Ballenstützvorrichtung (9),
wobei das Ballenformmittel (10, 11a, 11b, 11c, 11d, 12, 13, 15, 18)
- eine Ballenformkammer bereitstellt und
- angeordnet ist, um einen Ballen (B2) in der bereitgestellten Ballenformkammer zu formen,
wobei die Einwickelvorrichtung (40) außerhalb der bereitgestellten Ballenformkammer angeordnet ist,
wobei die Ballenform- und -einwickelvorrichtung (1) angeordnet ist, um
- einen geformten Ballen (B) aus der Ballenformkammer wegzubewegen und
- den wegbewegten Ballen (B) in eine Einwickelstellung außerhalb der Ballenformkammer zu bringen, und
wobei die Ballenform- und -einwickelvorrichtung (1) weiterhin angeordnet ist, um den in die Einwickelstellung gebrachten Ballen (B) in Wickelmaterial einzuwickeln, das aus dem mindestens einen Vorrat entnommen wurde,
wobei die Ballenstützvorrichtung (9) und das Ballenformmittel (10, 11a, 11b, 11c, 11d, 12, 13, 15, 18) angeordnet sind, um
- gemeinsam einen Ballen (B), der sich in der Einwickelstellung befindet, außerhalb der Ballenformkammer zu halten und
- eine Drehung des beförderten Ballens (B) zu ermöglichen,
wobei der Ballen (B), der in die Einwickelstellung gebracht wurde, zwischen
- der Ballenstützvorrichtung (9) und
- dem Ballenformmittel (10, 11a, 11b, 11c, 11d, 12, 13, 15, 18)
angeordnet ist, und
wobei die Ballenform- und -einwickelvorrichtung (1) angeordnet ist, um den Ballen (B) zu drehen und einzuwickeln, während der Ballen (B) gemeinsam in der Einwickelstellung gehalten wird, **dadurch gekennzeichnet, dass** die Einwickelvorrichtung (40) weiterhin eine Vorratsbewe-gungsvorrichtung (33) aufweist,
wobei die Vorratsbewegungsvorrichtung (33) angeordnet ist, um die oder jede Vorratsaufnahme (30.1, 30.2) um den Ballen (B) zu bewegen, der in der Einwickelstellung gehalten wird.

2. Ballenform- und -einwickelvorrichtung nach Anspruch 1, **dadurch gekennzeichnet, dass** die Vorratsbewegungsvorrichtung (33) angeordnet ist, um die oder jede Vorratsaufnahme (30.1, 30.2) in einer Aufnahmeführungsebene (HGP) um einen in die Einwickelstellung gebrachten Ballen (B) zu bewegen,
wobei sich die Aufnahmeführungsebene (HGP) in einer vertikalen Ausrichtung oder geneigt befindet.

3. Ballenform- und -einwickelvorrichtung nach Anspruch 1 oder 2, **dadurch gekennzeichnet, dass**
die Vorratsbewegungsvorrichtung (33) einen Vorratsbewegungsring (33) aufweist,
wobei der Vorratsbewegungsring (33) zwischen
- der Ballenstützvorrichtung (9) und
- dem Ballenformmittel (10, 11a, 11b, 11c, 11d, 12, 13, 15, 18)
angeordnet ist,
wobei die oder jede Vorratsaufnahme (30.1, 30.2) an dem Vorratsbewegungsring (33) montiert ist, und
wobei der Vorratsbewegungsring (33) angepasst ist, um die oder jede Vorratsaufnahme (30.1, 30.2) um einen in die Einwickelstellung gebrachten Ballen (B) herum zu bewegen.

4. Ballenform- und -einwickelvorrichtung nach mindestens einem der Ansprüche 1 bis 3, **dadurch gekennzeichnet, dass**
die Vorratsbewegungsvorrichtung (33) mindestens einen Vorratsbewegungsarm zum Bewegen der oder jeder Vorratsaufnahme (30.1, 30.2) um einen in die Einwickelstellung gebrachten Ballen (B) herum aufweist,
wobei die Vorratsbewegungsvorrichtung (33) angeordnet ist, um den oder jeden Vorratsbewe-gungsarm um einen in die Einwickelstellung gebrachten Ballen (B) herum zu bewegen.

5. Ballenform- und -einwickelvorrichtung nach Anspruch 4, **dadurch gekennzeichnet, dass** der oder jeder Vorratsbewegungsarm zwischen
- der Ballenstützvorrichtung (9) und
- dem Ballenformmittel (10, 11a, 11b, 11c, 11d, 12, 13, 15, 18)
angeordnet ist,

6. Ballenform- und -einwickelvorrichtung nach mindestens einem der vorhergehenden Ansprüche, **dadurch gekennzeichnet, dass**
das Ballenformmittel (10, 11a, 11b, 11c, 11d, 12, 13, 15, 18) angeordnet ist, um einen weiteren Ballen (B2) in der Ballenformkammer verdrehen,
wobei das Ballenformmittel (10, 11a, 11b, 11c, 11d, 12, 13, 15, 18) weiterhin angeordnet ist, um den gemeinsam in die Einwickelstellung gebrachten Ballen (B) zu verdrehen.

7. Ballenform- und -einwickelvorrichtung nach Anspruch 6, **dadurch gekennzeichnet, dass** das Ballenformmittel (10, 11a, 11b, 11c, 11d, 12, 13, 15, 18) angeordnet ist, um das Verdrehen mit mindestens zwei verschiedenen Geschwindigkeiten durchzuführen,
wobei die Geschwindigkeit des Ballenformmittels (10, 11a, 11b, 11c, 11d, 12, 13, 15, 18) davon abhängt, ob das Ballenformmittel (10, 11a, 11b, 11c, 11d, 12, 13, 15, 18) und die Ballenstütz-vorrichtung (9) gegenwärtig einen Ballen (B) in die Einwickelstellung bringen.

8. Ballenform- und -einwickelvorrichtung nach mindestens einem der vorhergehenden Ansprüche, **dadurch gekennzeichnet, dass**
die oder jede Vorratsaufnahme (30.1, 30.2) zwischen
- der Ballenstützvorrichtung (9) und
- dem Ballenformmittel (10, 11a, 11b, 11c, 11d, 12, 13, 15, 18)
angeordnet ist.

9. Ballenform- und -einwickelvorrichtung nach mindestens einem der vorhergehenden Ansprüche, **dadurch gekennzeichnet, dass**
die Ballenstützvorrichtung (9)
- eine obere Ballenstützrolle (32.u) und
- eine untere Ballenstützrolle (32.l)
aufweist,
wobei die obere Ballenstützrolle (32.u) vertikal oder geneigt oberhalb der unteren Ballenstützrolle (32.l)angeordnet ist und
wobei beide Ballenstützrollen (32.l, 32.u) angeordnet sind, um
- einen in die Einwickelstellung gebrachten Ballen (B) zu kontaktieren oder
- mindestens ein Band (35.l, 35.r) zu führen, das den in die Einwickelstellung gebrachten Ballen (B) kontaktiert.

10. Ballenform- und -einwickelvorrichtung nach Anspruch 9, **dadurch gekennzeichnet, dass** die beiden Ballenstützrollen (32.l, 32.u) um zwei parallele Drehachsen drehbar sind und
die Einwickelvorgangs (40) eine Vorratsbewegungsvorrichtung (33) aufweist,
wobei die Vorratsbewegungsvorrichtung (33) angeordnet ist, um die oder jede Vorratsaufnahme (30.1, 30.2) in einer Aufnahmeführungsebene (HGP) um einen in die Einwickelstellung gebrach-ten Ballen (B) zu bewegen,
wobei sich die beiden Rollendrehachsen in der Aufnahmeführungsebene (HGP) oder parallel dazu befinden.

11. Ballenform- und -einwickelvorrichtung nach Anspruch 9 oder 10, **dadurch gekennzeichnet, dass**
die beiden Ballenstützrollen (32.l, 32.u) Tragrollen sind.

12. Ballenform- und -einwickelvorrichtung nach mindestens einem der vorhergehenden Ansprüche, **dadurch gekennzeichnet, dass**
die Ballenstützvorrichtung (9) schwenkbar montiert ist,
wobei die Schwenkachse (34) der Ballenstützvorrichtung (9) horizontal verläuft und
wobei die Einwickelvorrichtung (40) einen Schwenkaktuator zum Verschwenken der Ballenstütz-vorrichtung (9) um die Schwenkachse (34) aufweist.

13. Ballenform- und -einwickelvorrichtung nach Anspruch 12, **dadurch gekennzeichnet, dass** die Einwickelvorrichtung (40) eine Vorratsbewegungsvorrichtung (33) aufweist,
wobei die Vorratsbewegungsvorrichtung (33) angeordnet ist, um die oder jede Vorratsaufnahme (30.1, 30.2) in einer Aufnahmeführungsebene (HGP) um einen in die Einwickelstellung gebrachten Ballen (B) zu bewegen,
wobei sich die Schwenkachse (34) der Ballenstützvorrichtung (9) in der Aufnahmeführungsebene (HGP) oder parallel dazu befindet.

14. Verfahren zum Formen und Einwickeln eines Ballens (B),
wobei das Verfahren durch Verwendung einer Ballenform- und -einwickelvorrichtung (1) durchgeführt wird, die das Folgende aufweist:
- ein Ballenformmittel (10, 11a, 11b, 11c, 11d, 12, 13, 15, 18) und
- eine Einwickelvorrichtung (40),
wobei die Einwickelvorrichtung (40) das Folgende aufweist:
- mindestens eine Vorratsaufnahme (30.1, 30.2) zum Aufnehmen eines Vorrats an Wickelmaterial und
- eine Ballenstützvorrichtung (9),
wobei das Verfahren die Schritte aufweist, dass
- das Ballenformmittel (10, 11a, 11b, 11c, 11d, 12, 13, 15, 18) zumindest vorübergehend eine Ballenformkammer bereitstellt und diese teilweise begrenzt,
- das Ballenformmittel (10, 11a, 11b, 11c, 11d, 12, 13, 15, 18) den Ballen (B) in der bereitgestellten Ballenformkammer formt,
- das Ballenformmittel (10, 11a, 11b, 11c, 11d, 12, 13, 15, 18) den geformten Ballen (B) aus der Ballenformkammer in eine Einwickelstellung außerhalb der Ballenform-kammer bewegt, und
- der Ballen (B) anschließend in der Einwickelstellung außerhalb der Ballenformkam-mer eingewickelt wird, und
wobei der Schritt, dass der Ballen (B) in der Einwickelstellung eingewickelt wird, die Schritte auf-weist, dass
- der Ballen (B) in der Einwickelstellung drehend gehalten wird und
- der Ballen (B) in Wickelmaterial eingewickelt wird, das aus dem oder mindestens einen Vorrat entnommen wird,
**dadurch gekennzeichnet, dass**
der Schritt, dass der Ballen (B) eingewickelt wird, zusätzlich die Schritte aufweist, dass der Ballen (B) gemeinsam durch
- die Ballenstützvorrichtung (9) und
- das Ballenformmittel (10, 11a, 11b, 11c, 11d, 12, 13, 15, 18)
gehalten wird, während der Ballen (B) in der Einwickelstellung gehalten und eingewickelt wird, und
wobei die Vorratsbewegungsvorrichtung (33) die oder jede Vorratsaufnahme (30.1, 30.2) um den gemeinsam in der Einwickelstellung gehaltenen Ballen (B) herum bewegt; und
wobei der Ballen (B) in der Einwickelstellung
- zwischen der Ballenstützvorrichtung (9) und dem das Ballenformmittel (10, 11a, 11b, 11c, 11d, 12, 13, 15, 18) angeordnet ist und
- verdreht wird.

15. Ballenform- und -einwickelverfahren nach Anspruch 14, **dadurch gekennzeichnet, dass** das Verfahren die weiteren Schritte aufweist, dass
das Ballenformmittel (10, 11a, 11b, 11c, 11d, 12, 13, 15, 18) einen weiteren Ballen (B2) in der Ballenformkammer formt,
wobei die Schritte, dass
- der Ballen (B) in der Einwickelstellung eingewickelt wird und
- der weitere Ballen (B2) in der Ballenformkammer geformt wird
zeitlich überlappend ausgeführt werden.

## Revendications

1. Dispositif de formation et d'emballage de balle (1) comprenant
un moyen de formation de balle (10, 11a, 11b, 11c, 11d, 12, 13, 15, 18) et
un dispositif d'emballage (40),
dans lequel le dispositif d'emballage (40) comprend
au moins un support de réservoir (30.1, 30.2) destiné à supporter un réservoir avec du matériau d'emballage et
un dispositif de support de balle (9),
dans lequel le moyen de formation de balle (10, 11a, 11b, 11c, 11d, 12, 13, 15, 18) intègre un compartiment de formation de balle et
est agencé de manière à former une balle (B2) dans le compartiment de formation de balle intégré,
dans lequel le dispositif d'emballage (40) est positionné à l'extérieur du compartiment de formation de balle intégré,
dans lequel le dispositif de formation et d'emballage de balle (1) est agencé de manière à
déplacer une balle (B) formée hors du compartiment de formation de balle et
transporter la balle (B) déplacée dans une position d'emballage à l'extérieur du compartiment de formation de balle, et
dans lequel le dispositif de formation et d'emballage de balle (1) est, en outre, agencé de manière à emballer la balle (B) transportée dans la position d'emballage dans un matériau d'emballage prélevé à partir du ou d'au moins un réservoir,
dans lequel le dispositif de support de balle (9) et le moyen de formation de balle (10, 11a, 11b, 11c, 11d, 12, 13, 15, 18) sont agencés de manière à
transporter conjointement une balle (B) placée dans la position d'emballage à l'extérieur du compartiment de formation de balle et
permettre la rotation de la balle (B) supportée,
dans lequel la balle (B) transportée dans la position d'emballage est positionnée entre
le dispositif de support de balle (9) et
le moyen de formation de balle (10, 11a, 11b, 11c, 11d, 12, 13, 15, 18), et dans lequel le dispositif de formation et d'emballage de balle (1) est agencé de manière à tourner et à envelopper la balle (B) pendant que la balle (B) est transportée conjointement dans la position d'emballage
**caractérisé en ce que** le dispositif d'emballage (40) comprend, en outre, un dispositif de déplacement de réservoir (33),
dans lequel le dispositif de déplacement de réservoir (33) est agencé de manière à déplacer le ou chaque support de réservoir (30.1, 30.2) autour de la balle (B) transportée dans la position d'emballage.

2. Dispositif de formation et d'emballage de balle selon la revendication 1,
**caractérisé en ce que**
le dispositif de déplacement de réservoir (33) est agencé de manière à déplacer le ou chaque support de réservoir (30.1, 30.2) dans un plan de guidage de support (HGP) autour d'une balle (B) qui est transportée dans la position d'emballage,
dans lequel le plan de guidage de support (HGP) est orienté verticalement ou est incliné angulairement.

3. Dispositif de formation et d'emballage de balle selon l'une des revendications 1 ou 2,
**caractérisé en ce que**
le dispositif de déplacement de réservoir comprend une bague de déplacement de réservoir (33),
dans lequel la bague de déplacement de réservoir (33) est positionnée
entre le dispositif de support de balle (9) et
le moyen de formation de balle (10, 11a, 11b, 11c, 11d, 12, 13, 15, 18),
dans lequel le ou chaque support de réservoir (30.1, 30.2) est monté sur la bague de déplacement de réservoir (33), et
dans lequel la bague de déplacement de réservoir (33) est adaptée de manière à déplacer le ou chaque support de réservoir (30.1, 30.2) autour d'une balle (B) qui est transportée dans la position d'emballage.

4. Dispositif de formation et d'emballage de balle selon l'une des revendications 1 à 3,
**caractérisé en ce que**
le dispositif de déplacement de réservoir (33) comprend au moins un bras de déplacement de réservoir afin de transporter le ou un premier support de réservoir (30.1, 30.2) autour d'une balle (B) qui est transportée dans la position d'emballage,
dans lequel le dispositif de déplacement de réservoir (33) est agencé afin de déplacer le ou chaque bras de déplacement de réservoir autour d'une balle (B) qui est transportée dans la position d'emballage.

5. Dispositif de formation et d'emballage de balle selon la revendication 4,
**caractérisé en ce que**
le ou chaque bras de déplacement de réservoir est positionné entre
le dispositif de support de balle (9) et
le moyen de formation de balle (10, 11a, 11b, 11c, 11d, 12, 13, 15, 18).

6. Dispositif de formation et d'emballage de balle selon l'une quelconque des revendications précédentes,
**caractérisé en ce que**
le moyen de formation de balle (10, 11a, 11b, 11c, 11d, 12, 13, 15, 18) est agencé de manière à faire tourner une autre balle (B2) dans le compartiment de formation de balle,
dans lequel le moyen de formation de balle (10, 11a, 11b, 11c, 11d, 12, 13, 15, 18) est, en outre, agencé de manière à faire tourner la balle (B) qui est transportée conjointement dans la position d'emballage.

7. Dispositif de formation et d'emballage de balle selon la revendication 6,
**caractérisé en ce que**
le moyen de formation de balle (10, 11a, 11b, 11c, 11d, 12, 13, 15, 18) est agencé de manière à tourner à au moins deux vitesses différentes,
dans lequel la vitesse du moyen de formation de balle (10, 11a, 11b, 11c, 11d, 12, 13, 15, 18) dépend du fait que le moyen de formation de balle (10, 11a, 11b, 11c, 11d, 12, 13, 15, 18) et le dispositif de support de balle (9) transportent à cet instant ou pas une balle (B) dans la position d'emballage.

8. Dispositif de formation et d'emballage de balle selon l'une des revendications précédentes,
**caractérisé en ce que**
le ou chaque support de réservoir (30.1, 30.2) est positionné entre
le dispositif de support de balle (9) et
le moyen de formation de balle (10, 11a, 11b, 11c, 11d, 12, 13, 15, 18).

9. Dispositif de formation et d'emballage de balle selon l'une des revendications précédentes,
**caractérisé en ce que**
le dispositif de support de balle (9) comprend
un rouleau de support de balle supérieur (32.u) et
un rouleau de support de balle inférieur (32.l),
dans lequel le rouleau de support de balle supérieur (32.u) est positionné verticalement ou angulairement au-dessus du rouleau de support de balle inférieur (32.l) et
dans lequel les deux rouleaux support de balle (32.l, 32.u) sont agencés de manière à
venir en contact avec une balle (B) transportée dans la position d'emballage ou
guider au moins une bande (35.I, 35.r) qui est en contact avec la balle (B) transportée dans la position d'emballage.

10. Dispositif de formation et d'emballage de balle selon la revendication 9,
**caractérisé en ce que**
les deux rouleaux support de balle (32.l, 32.u) peuvent tourner autour de deux axes de rotation parallèles et
le dispositif d'emballage (40) comprend un dispositif de déplacement de réservoir (33),
dans lequel le dispositif de déplacement de réservoir (33) est agencé de manière à déplacer le ou chaque support de réservoir (30.1, 30.2) dans un plan de guidage de support (HGP) autour d'une balle (B) qui est transportée dans la position d'emballage,
dans lequel les deux axes de rotation de rouleau sont dans le plan de guidage de support (HGP) ou parallèle à celui-ci.

11. Dispositif de formation et d'emballage de balle selon la revendication 9 ou 10,
**caractérisé en ce que**
les deux rouleaux de support de balle (32.l, 32.u) sont des rouleaux libres.

12. Dispositif de formation et d'emballage de balle selon l'une des revendications précédentes,
**caractérisé en ce que**
le dispositif de support de balle (9) est monté de manière à pouvoir pivoter,
dans lequel l'axe de pivotement (34) du dispositif de support de balle (9) est horizontal et
dans lequel le dispositif d'emballage (40) comprend un actionneur de pivotement destiné faire pivoter le dispositif de support de balle (9) autour de cet axe de pivotement (34).

13. Dispositif de formation et d'emballage de balle selon la revendication 12,
**caractérisé en ce que**
le dispositif d'emballage (40) comprend un dispositif de déplacement de réservoir (33),
dans lequel le dispositif de déplacement de réservoir (33) est agencé afin de déplacer le ou chaque support de réservoir (30.1, 30.2) dans un plan de guidage de support (HGP) autour d'une balle (B) qui est transportée dans la position d'emballage,
dans lequel l'axe de pivotement (34) du dispositif de support de balle (9) est dans le plan de guidage de support (HGP) ou parallèle à celui-ci.

14. Procédé de formation et d'emballage de balle (B),
dans lequel le procédé est exécuté en utilisant un dispositif de formation et d'emballage de balle (1) comprenant
un moyen de formation de balle (10, 11a, 11b, 11c, 11d, 12, 13, 15, 18) et
un dispositif d'emballage (40),
dans lequel le dispositif d'emballage (40) comprend
au moins un support de réservoir (30.1, 30.2) destiné à supporter un réservoir avec du matériau d'emballage,
un dispositif de déplacement de réservoir (33) destiné à déplacer le ou chaque support de réservoir (30.1, 30.2), et
un dispositif de support de balle (9),
dans lequel le procédé comprend les étapes dans lesquelles
le moyen de formation de balle (10, 11a, 11b, 11c, 11d, 12, 13, 15, 18) forme au moins temporairement et délimite partiellement un compartiment de formation de balle,
le moyen de formation de balle (10, 11a, 11b, 11c, 11d, 12, 13, 15, 18) forme la balle (B) dans le compartiment de formation de balle intégré,
le moyen de formation de balle (10, 11a, 11b, 11c, 11d, 12, 13, 15, 18) déplace la balle (B) formée hors du compartiment de formation de balle dans une position d'emballage à l'extérieur du compartiment de formation de balle, et
la balle (B) est ensuite emballée dans la position d'emballage à l'extérieur du compartiment de formation de balle, et
dans lequel l'étape dans laquelle la balle (B) est emballée dans la position d'emballage comprend les étapes dans lesquelles
la balle (B) est transportée de manière à pouvoir tourner dans la position d'emballage et
la balle (B) est emballée dans le matériau d'emballage qui est prélevé à partir du réservoir ou à partir du au moins un réservoir,
**caractérisé en ce que**
l'étape dans laquelle la balle (B) est emballée comprend, en outre, les étapes dans lesquelles la balle (B) est transportée conjointement par :
le dispositif de support de balle (9) et
le moyen de formation de balle (10, 11a, 11b, 11c, 11d, 12, 13, 15, 18) pendant que la balle (B) est maintenue dans la position d'emballage et est emballée, et
le dispositif de déplacement de réservoir (33) déplace le ou chaque support de réservoir (30.1, 30.2) autour de la balle (B) transportée conjointement dans la position d'emballage ; et dans lequel la balle (B) dans la position d'emballage
est positionnée entre le dispositif de support de balle (9) et le moyen de formation de balle (10, 11a, 11b, 11c, 11d, 12, 13, 15, 18) et
est entraînée en rotation.

15. Procédé de formation et d'emballage de balle selon la revendication 14,
**caractérisé en ce que**
le procédé comprend, en outre, l'étape supplémentaire dans laquelle
le moyen de formation de balle forme une balle (B2) supplémentaire dans le compartiment de formation de balle,
dans lequel les étapes dans lesquelles
la balle (B) est emballée dans la position d'emballage et
la balle (B2) supplémentaire est formée dans le compartiment de formation de balle
sont réalisées de manière opportune avec recouvrement.
